# EUROPEAN PATENT APPLICATION

(11) **EP 3 528 133 A1**
(43) Date of publication of application: **21.08.2019**
(21) Application number: 17866757.2
(22) Date of filing: 26.06.2017
(51) Int. Cl.: G06F 13/40

(54) **DATA STREAM JOIN METHOD AND DEVICE**

(30) Priority: 01.11.2016 CN 201610965692
(71) Applicant: Huawei Technologies Co., Ltd., Longgang District Shenzhen, Guangdong 518129 (CN)
(72) Inventor: LIU, Xinchun, Shenzhen Guangdong 518129 (CN); ZHANG, Rucong, Shenzhen Guangdong 518129 (CN); JIANG, Song, Shenzhen Guangdong 518129 (CN)
(74) Representative: Körber, Martin Hans
(86) International application number: PCT/CN2017/090084
(87) International publication number: WO 2018/082320

(57) **Abstract**

This application provides a data stream connection method and apparatus. A join predicate between at least three data streams is determined based on attributes of the at least three data streams, a first connection order in which the at least three data streams are sequentially adjacent to each other is obtained based on the join predicate, and a data distribution of values of each attribute in the join predicate is determined. Subsequently, after a new tuple of any data stream is received, a data distribution corresponding to an attribute of the data stream is adjusted. Finally, the first connection order is adjusted to a second connection order based on the adjusted data distribution. In the process, a data distribution of values of an attribute corresponding to a data stream in which a new tuple is located is adjusted each time after the new tuple is received, so that the adjusted data distribution is consistent with an actual data distribution. Further, the second connection order of data streams is determined based on the data distribution adjusted in real time, thereby dynamically adjusting a connection order of data streams, and improving data stream connection efficiency.

## Description

### TECHNICAL FIELD

Embodiments of this application relate to data stream connection technologies, and in particular, to a data stream connection method and apparatus.

### BACKGROUND

With constant development information technologies, a generation speed of information is extremely high. More information is provided for users in a form of a "stream". Such a form of information is referred to as a data stream.

An outstanding feature of the data stream is time validity. With proceeding of time, data appearing earlier has less value. Therefore, a sliding window has been introduced. A user only pays attention to a part of a data stream appearing in the sliding window. In addition, restricted by a data stream collection device and the like, a single data stream can provide only a part of information. In this case, to obtain comprehensive information, a connection operation needs to be performed on a plurality of data streams, which is also referred to as a join (JOIN) operation, to combine the plurality of data streams. In a connection operation process, when there are more than three data streams, the data streams are connected in order. A different connection order indicates a different quantity of generated intermediate results and connection efficiency. A correct connection order is one of important factors of the connection operation. The intermediate result is a result of a connection operation performed on data streams on which the connection operation has been performed before a final result is obtained and when the connection operation has not performed on two or more data streams.

Currently, a connection order is mainly determined in the following two manners: In a first manner, an application programming interface (Application Programming Interface, API) and an abundant operator library are provided, and a user selects a proper operator in a programming manner to determine the connection order. In a second manner, a user determines the connection order by writing a query statement. After the connection order is determined, the data streams are joined in the determined connection order.

In the foregoing data stream join process, the data streams are joined in the determined connection order. Once the connection order is determined, the connection order of the data stream is constant, in other words, the connection order no longer changes. However, with proceeding of time, data in the sliding window is constantly updated, and a pre-determined connection order is not necessarily an optimal connection order. Consequently, data stream join cannot be completed highly efficiently.

### SUMMARY

This application provides a data stream connection method and apparatus, to improve data stream connection efficiency by dynamically adjusting a connection order of data streams.

According to a first aspect, an embodiment of this application provides a data stream connection method. In the method, a join predicate between at least three data streams is determined based on respective attributes of the at least three data streams, a first connection order in which the at least three data streams are sequentially adjacent to each other is obtained based on the join predicate, and a data distribution of values of each attribute in the join predicate is determined. Subsequently, after a new tuple of any data stream is received, a data distribution corresponding to an attribute of the data stream is adjusted. Finally, the first connection order is adjusted to a second connection order based on the adjusted data distribution. Among the at least three data streams, attributes that every two data streams have and that have equal values are a join predicate between the two data streams; an order formed by sorting the at least three data streams based on equal attributes is the first connection order; and the data distribution includes a histogram, a pie graph, a table, and the like in statistics.

In the foregoing method, a data distribution of values of an attribute corresponding to a data stream in which a new tuple is located is adjusted each time after the new tuple is received, so that the adjusted data distribution is consistent with an actual data distribution. Further, the second connection order of data streams is determined based on the data distribution adjusted in real time, thereby dynamically adjusting a connection order of data streams, and improving data stream connection efficiency.

In a feasible implementation, the adjusting, based on the new tuple, a data distribution corresponding to an attribute of the i^{th} data stream in the plurality of data distributions includes: determining whether the data distribution corresponding to the attribute of the i^{th} data stream exceeds an error threshold; and if the data distribution corresponding to the attribute of the i^{th} data stream does not exceed the error threshold, deleting a value of an expired tuple in the data distribution corresponding to the attribute of the i^{th} data stream, and adding a value of the received new tuple to the data distribution, where the expired tuple is a tuple that has flown out of a sliding window of the i^{th} data stream; or if the data distribution corresponding to the attribute of the i^{th} data stream exceeds the error threshold, reconstructing the data distribution corresponding to the attribute of the i^{th} data stream.

In the foregoing method, an error threshold is set for the data distribution. When the data distribution does not exceed the error threshold, it indicates that the data distribution conforms to an actual data distribution in the sliding window, and only an existing data distribution needs to be maintained, to be specific, a value of a new tuple is accumulated onto a data distribution corresponding to the new tuple. When the data distribution exceeds the error threshold, it indicates that the data distribution does not conform to the actual data distribution in the sliding window, and the data distribution corresponding to the new tuple needs to be reconstructed, to maintain the data distribution in real time.

In a feasible implementation, the error threshold includes at least one of the following thresholds: a first threshold, a second threshold, and a third threshold, where
a quantity of single-element buckets in the data distribution corresponding to the attribute of the i^{th} data stream exceeds the first threshold, where tuples in the single-element bucket are of a same type; a parameter of a non-single-element bucket in the data distribution corresponding to the attribute of the i^{th} data stream exceeds the second threshold, where there are at least one type of tuples in the non-single-element bucket, and the parameter includes a depth or a width; and a difference between a quantity of buckets in the data distribution corresponding to the attribute of the i^{th} data stream and an initial quantity of buckets in the data distribution corresponding to the attribute of the i^{th} data stream exceeds the third threshold.

By using the foregoing method, the error threshold of the data distribution can be set flexibly.

In a feasible implementation, the i^{th} data stream is not the first data stream or the last data stream in the first connection order, and the adjusting the first connection order to a second connection order based on the plurality of updated data distributions includes: determining, based on the first connection order, an (i-1)^{th} data stream and an (i+1)^{th} data stream that are adjacent to the i^{th} data stream; determining a first quantity based on a data distribution corresponding to an attribute of the (i-1)^{th} data stream and the data distribution corresponding to the attribute of the i^{th} data stream, where the first quantity is a quantity of first intermediate results, and the first intermediate result is an intermediate result generated when a connection operation is performed on the (i-1)^{th} data stream and the (i+1)^{th} data stream; determining a second quantity based on the data distribution corresponding to the attribute of the i^{th} data stream and a data distribution corresponding to an attribute of the (i+1)^{th} data stream, where the second quantity is a quantity of second intermediate results, and the second intermediate result is an intermediate result generated when the connection operation is performed on the i^{th} data stream and the (i+1)^{th} data stream; determining, in the (i-1)^{th} data stream and the (i+1)^{th} data stream based on the first quantity and the second quantity, a data stream connected to the i^{th} data stream; performing the connection operation on the determined data stream and the i^{th} data stream, to obtain an intermediate result; and adjusting the first connection order based on the intermediate result, to obtain the second connection order. For example, after the intermediate result is obtained, a data stream connected to the intermediate result in the first connection order continues to be determined, and the operation is repeated, until the connection operation is performed on each of the at least three data streams, to adjust the first connection order to the second connection order, where the intermediate result is the first intermediate result or the second intermediate result.

In the foregoing method, for any data stream other than the first data stream and the last data stream in the first connection order, only a quantity of intermediate results generated when the data stream is connected to left and right adjacent data streams is estimated, and a connection object is selected based on the quantity of intermediate results, thereby improving the data stream connection efficiency.

In a feasible implementation, the determining, in the (i-1)^{th} data stream and the (i+1)^{th} data stream based on the first quantity and the second quantity, a data stream connected to the i^{th} data stream includes:
if the first quantity is less than the second quantity, determining, in the (i-1)^{th} data stream and the (i+1)^{th} data stream, that the data stream connected to the i^{th} data stream is the (i-1)^{th} data stream; and correspondingly, the performing the connection operation on the determined data stream and the i^{th} data stream, to obtain an intermediate result includes: performing the connection operation on the (i-1)^{th} data stream and the i^{th} data stream, to obtain the first intermediate result.

In the foregoing method, for a specific data stream, only a quantity of intermediate results generated when the data stream is connected to left and right adjacent data streams is estimated, and a connection object is selected from the left and right adjacent data streams, so that the quantity of intermediate results generated when the data stream is connected to the selected data stream is relatively small, thereby improving the data stream connection efficiency.

In a feasible implementation, the method further includes: determining, based on a data distribution corresponding to an attribute of an (i-2)^{th} data stream, a third quantity of intermediate results generated when the connection operation is performed on the (i-2)^{th} data stream and the first intermediate result; determining, based on the data distribution corresponding to the attribute of the (i+1)^{th} data stream, a fourth quantity of intermediate results generated when the connection operation is performed on the first intermediate result and the (i+1)^{th} data stream; and determining, in the (i-2)^{th} data stream and the (i+1)^{th} data stream based on the third quantity and the fourth quantity, a data stream connected to the first intermediate result.

In the foregoing method, after an intermediate result is obtained, a quantity of intermediate results generated again when the intermediate result is connected to a left data stream and a right data stream that are adjacent to the intermediate result continues to be estimated, and a connection object is selected based on the quantity of intermediate results generated again, thereby improving the data stream connection efficiency.

In a feasible implementation, the determining, in the (i-1)^{th} data stream and the (i+1)^{th} data stream based on the first quantity and the second quantity, a data stream connected to the i^{th} data stream includes: if the first quantity is greater than the second quantity, determining, in the (i-1)^{th} data stream and the (i+1)^{th} data stream, that the data stream connected to the i^{th} data stream is the (i+1)^{th} data stream; and correspondingly, the performing the connection operation on the determined data stream and the i^{th} data stream, to obtain an intermediate result includes: performing the connection operation on the i^{th} data stream and the (i+1)^{th} data stream, to obtain the second intermediate result.

In the foregoing method, for a specific data stream, only a quantity of intermediate results generated when the data stream is connected to left and right adjacent data streams is estimated, and a connection object is selected from the left and right adjacent data streams, so that the quantity of intermediate results generated when the data stream is connected to the selected data stream is relatively small, thereby improving the data stream connection efficiency.

In a feasible implementation, the method further includes: determining, based on a data distribution corresponding to an attribute of an (i+2)^{th} data stream, a fifth quantity of intermediate results generated when the connection operation is performed on the second intermediate result and the (i+2)^{th} data stream; determining, based on the data distribution corresponding to the attribute of the (i-1)^{th} data stream, a sixth quantity of intermediate results generated when the connection operation is performed on the (i-1)^{th} data stream and the second intermediate result; and determining, in the (i-1)^{th} data stream and the (i+2)^{th} data stream based on the fifth quantity and the sixth quantity, a data stream connected to the second intermediate result.

In the foregoing method, after an intermediate result is obtained, a quantity of intermediate results generated again when the intermediate result is connected to a left data stream and a right data stream that are adjacent to the intermediate result continues to be estimated, and a connection object is selected based on the quantity of intermediate results generated again, thereby improving the data stream connection efficiency.

In a feasible implementation, the adjusting the first connection order to a second connection order based on the plurality of updated data distributions includes: when the i^{th} data stream is the first data stream in the first connection order, using the first connection order as the second connection order; and when the i^{th} data stream is the last data stream in the first connection order, reversing the first connection order, to obtain the second connection order.

In the foregoing method, for the first data stream in the first connection order, the first connection order is directly used as the second connection order; and for the last data stream in the first connection order, the first connection order is directly reversed, to obtain the second connection order, thereby improving the data stream connection efficiency.

In a feasible implementation, the determining a data distribution of values of each of the plurality of attributes includes: for each attribute, grouping the values of the attribute, where each group corresponds to one bucket in the data distribution, to obtain the data distribution of the values of each of the plurality of attributes.

By using the foregoing method, a data distribution of values of each attribute is constructed.

According to a second aspect, an embodiment of this application provides a data stream connection apparatus. The apparatus includes:
a processing module, configured to: determine a join predicate between at least three data streams, where the join predicate includes a plurality of attributes, the join predicate indicates a first connection order of the at least three data streams, and the plurality of attributes are attributes that two adjacent data streams in the first connection order have and that have equal values; and determine a data distribution of values of each of the plurality of attributes; and
a receiving module, configured to receive a new tuple of an i^{th} data stream in the first connection order through a sliding window, where i is a positive integer, where
the processing module is further configured to: adjust, based on the new tuple, a data distribution corresponding to an attribute of the i^{th} data stream in the plurality of attributes, to obtain a plurality of updated data distributions; and adjust the first connection order to a second connection order based on the plurality of updated data distributions.

In the foregoing data stream connection apparatus, a data distribution of values of an attribute corresponding to a data stream in which a new tuple is located is adjusted each time after the new tuple is received, so that the adjusted data distribution is consistent with an actual data distribution. Further, the second connection order of data streams is determined based on the data distribution adjusted in real time, thereby dynamically adjusting a connection order of data streams, and improving data stream connection efficiency.

In a feasible implementation, when adjusting the data distribution corresponding to the attribute of the i^{th} data stream in the plurality of attributes, to obtain the plurality of updated data distributions, the processing module is specifically configured to: determine whether the data distribution corresponding to the attribute of the i^{th} data stream exceeds an error threshold; and if the data distribution corresponding to the attribute of the i^{th} data stream does not exceed the error threshold, delete a value of an expired tuple in the data distribution corresponding to the attribute of the i^{th} data stream, and add a value of the received new tuple to the data distribution, where the expired tuple is a tuple that has flown out of the sliding window of the i^{th} data stream; or if the data distribution corresponding to the attribute of the i^{th} data stream exceeds the error threshold, reconstruct the data distribution corresponding to the attribute of the i^{th} data stream.

In a feasible implementation, the error threshold includes at least one of the following thresholds: a first threshold, a second threshold, and a third threshold, where a quantity of single-element buckets in the data distribution corresponding to the attribute of the i^{th} data stream exceeds the first threshold, where tuples in the single-element bucket are of a same type; a parameter of a non-single-element bucket in the data distribution corresponding to the attribute of the i^{th} data stream exceeds the second threshold, where there are at least one type of tuples in the non-single-element bucket, and the parameter includes a depth or a width; and a difference between a quantity of buckets in the data distribution corresponding to the attribute of the i^{th} data stream and an initial quantity of buckets in the data distribution corresponding to the attribute of the i^{th} data stream exceeds the third threshold.

In a feasible implementation, the i^{th} data stream is not the first data stream or the last data stream in the first connection order; when adjusting the first connection order to the second connection order based on the plurality of updated data distributions, the processing module is specifically configured to: determine, based on the first connection order, an (i-1)^{th} data stream and an (i+1)^{th} data stream that are adjacent to the i^{th} data stream; determine a first quantity based on a data distribution corresponding to an attribute of the (i-1)^{th} data stream and the data distribution corresponding to the attribute of the i^{th} data stream, where the first quantity is a quantity of first intermediate results, and the first intermediate result is an intermediate result generated when a connection operation is performed on the (i-1)^{th} data stream and the (i+1)^{th} data stream; determine a second quantity based on the data distribution corresponding to the attribute of the i^{th} data stream and a data distribution corresponding to an attribute of the (i+1)^{th} data stream, where the second quantity is a quantity of second intermediate results, and the second intermediate result is an intermediate result generated when the connection operation is performed on the i^{th} data stream and the (i+1)^{th} data stream; determining, in the (i-1)^{th} data stream and the (i+1)^{th} data stream based on the first quantity and the second quantity, a data stream connected to the i^{th} data stream; performing the connection operation on the determined data stream and the i^{th} data stream, to obtain an intermediate result; and adjusting the first connection order based on the intermediate result, to obtain the second connection order.

In a feasible implementation, when determining, in the (i-1)^{th} data stream and the (i+1)^{th} data stream based on the first quantity and the second quantity, the data stream connected to the i^{th} data stream, the processing module is specifically configured to: if the first quantity is less than the second quantity, determine, in the (i-1)^{th} data stream and the (i+1)^{th} data stream, that the data stream connected to the i^{th} data stream is the (i-1)^{th} data stream; and correspondingly, when performing the connection operation on the determined data stream and the i^{th} data stream, to obtain the intermediate result, the processing module is specifically configured to perform the connection operation on the (i-1)^{th} data stream and the i^{th} data stream, to obtain the first intermediate result.

In a feasible implementation, the processing module is further configured to: determine, based on a data distribution corresponding to an attribute of an (i-2)^{th} data stream, a third quantity of intermediate results generated when the connection operation is performed on the (i-2)^{th} data stream and the first intermediate result; determine, based on the data distribution corresponding to the attribute of the (i+1)^{th} data stream, a fourth quantity of intermediate results generated when the connection operation is performed on the first intermediate result and the (i+1)^{th} data stream; and determine, in the (i-2)^{th} data stream and the (i+1)^{th} data stream based on the third quantity and the fourth quantity, a data stream connected to the first intermediate result.

In a feasible implementation, when determining, in the (i-1)^{th} data stream and the (i+1)^{th} data stream based on the first quantity and the second quantity, the data stream connected to the i^{th} data stream, the processing module is specifically configured to: if the first quantity is greater than the second quantity, determine, in the (i-1)^{th} data stream and the (i+1)^{th} data stream, that the data stream connected to the i^{th} data stream is the (i+1)^{th} data stream; and correspondingly, when performing the connection operation on the determined data stream and the i^{th} data stream, to obtain the intermediate result, the processing module is specifically configured to perform the connection operation on the i^{th} data stream and the (i+1)^{th} data stream, to obtain the second intermediate result.

In a feasible implementation, the processing module is further configured to: determine, based on a data distribution corresponding to an attribute of an (i+2)^{th} data stream, a fifth quantity of intermediate results generated when the connection operation is performed on the second intermediate result and the (i+2)^{th} data stream; determine, based on the data distribution corresponding to the attribute of the (i-1)^{th} data stream, a sixth quantity of intermediate results generated when the connection operation is performed on the (i-1)^{th} data stream and the second intermediate result; and determine, in the (i-1)^{th} data stream and the (i+2)^{th} data stream based on the fifth quantity and the sixth quantity, a data stream connected to the second intermediate result.

In a feasible implementation, when adjusting the first connection order to the second connection order based on the plurality of updated data distributions, the processing module is specifically configured to: when the i^{th} data stream is the first data stream in the first connection order, use the first connection order as the second connection order; or the processing module is specifically configured to: when the i^{th} data stream is the last data stream in the first connection order, reverse the first connection order, to obtain the second connection order.

In a feasible implementation, when determining the data distribution of the values of each of the plurality of attributes, the processing module is specifically configured to: for each attribute, group the values of the attribute, where each group corresponds to one bucket in the data distribution, to obtain the data distribution of the values of each of the plurality of attributes.

According to a third aspect, an embodiment of this application provides a data stream connection apparatus. The apparatus includes: a processor, a memory, a communications interface, and a system bus, where the memory and the communications interface are connected to the processor and communicate with the processor by using the system bus, the memory is configured to store a computer-executable instruction, the communications interface is configured to communicate with another device, and the processor is configured to run the computer-executable instruction, to cause the data stream connection apparatus to perform the method according to the first aspect or any possible implementation of the first aspect.

According to the data stream connection method and apparatus provided in the embodiments of this application, a join predicate between at least three data streams is determined based on respective attributes of the at least three data streams, a first connection order in which the at least three data streams are sequentially adjacent to each other is obtained based on the join predicate, and a data distribution of values of each attribute in the join predicate is determined. Subsequently, after a new tuple of any data stream is received, a data distribution corresponding to an attribute of the data stream is adjusted. Finally, the first connection order is adjusted to a second connection order based on the adjusted data distribution. In the process, a data distribution of values of an attribute corresponding to a data stream in which a new tuple is located is adjusted each time after the new tuple is received, so that the adjusted data distribution is consistent with an actual data distribution. Further, the second connection order of data streams is determined based on the data distribution adjusted in real time, thereby dynamically adjusting a connection order of data streams, and improving data stream connection efficiency.

### BRIEF DESCRIPTION OF DRAWINGS

FIG. 1 is a schematic diagram of a connection order of data streams changing with time;
FIG. 2 is a flowchart of Embodiment 1 of a data stream connection method according to this application;
FIG. 3 is a schematic architectural diagram of a data stream platform to which a data stream connection method is applicable according to this application;
FIG. 4 is a schematic diagram of an example of a histogram in a data stream connection method according to this application;
FIG. 5 is a schematic diagram of an example of a generation process of a join tree in a data stream connection method according to this application;
FIG. 6 is a schematic diagram of a change in a sliding window in a data stream connection method according to this application;
FIG. 7 is a schematic diagram of a maintenance process of a data distribution in a data stream connection method according to this application;
FIG. 8 is a schematic diagram of a process of selecting a data stream from adjacent data streams by using a local greedy policy in a data stream connection method according to this application;
FIG. 9 is a schematic diagram of a generation process of a join tree in a data stream connection method according to this application;
FIG. 10 is a schematic structural diagram of Embodiment 1 of a data stream connection apparatus according to this application; and
FIG. 11 is a schematic structural diagram of Embodiment 2 of a data stream connection apparatus according to this application.

### DESCRIPTION OF EMBODIMENTS

An outstanding feature of the data stream is time validity. With proceeding of time, data appearing earlier has less value. Therefore, a sliding window has been introduced. A user only pays attention to a part of a data stream appearing in the sliding window. Information provided by a single data stream is limited. Therefore, to obtain comprehensive information, a sliding window is set for each data stream, a join operation is performed on a part of each data stream appearing in the sliding window, to obtain comprehensive information. When a plurality of data streams are connected, different connection orders generate different quantities of intermediate results, resulting in different connection efficiency, but final results are the same. Therefore, selecting a correct connection order is important during data stream connection.

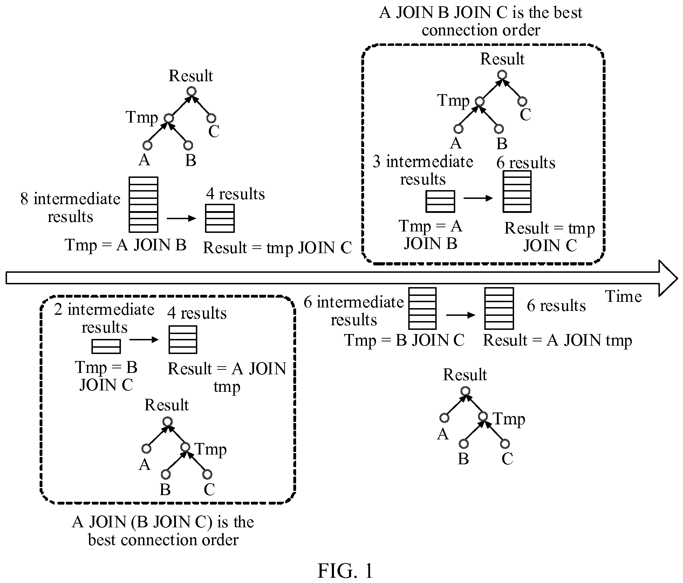

Currently, in a data stream connection process, a connection order is first determined. After the connection order is determined, data streams are joined in the determined connection order. In the process, data streams are joined in the determined connection order. Once the connection order is determined, the connection order of the data stream is constant, in other words, the connection order no longer changes. However, with proceeding of time, data in the sliding window is constantly updated, and a pre-determined connection order is not necessarily an optimal connection order. Specifically, FIG. 1 is a schematic diagram of a connection order of data streams changing with time.

Referring to FIG. 1, a connection operation is performed on a data stream A, a data stream B, and a data stream C. If a connection order at a first time point is A JOIN B JOIN C, A JOIN B generates 8 intermediate results. The 8 intermediate results are temporarily stored in a temporary register (tmp). Subsequently, the connection operation is performed on the tmp and the data stream C. Finally, 4 results (result) are generated. If the connection order at the first time point is A JOIN (B JOIN C), B JOIN C generates 2 intermediate results. The 2 intermediate results are stored in the tmp. Subsequently, the connection operation is performed on the data stream A and the tmp. Finally, 4 results are generated. Obviously, at the first time point, an optimal connection order is A JOIN (B JOIN C).

When the time proceeds to a second time point, if a connection order at the second time point is A JOIN B JOIN C, A JOIN B generates 3 intermediate results. The 3 intermediate results are stored in a temporary register (tmp). Subsequently, the connection operation is performed on the tmp and the data stream C. Finally, 6 results are generated. If the connection order at the second time point is A JOIN (B JOIN C), B JOIN C generates 6 intermediate results. The 6 intermediate results are stored in the tmp. Subsequently, the connection operation is performed on the data stream A and the tmp. Finally, 6 results are generated. Obviously, at the second time point, an optimal connection order is A JOIN B JOIN C.

As can be known from the above, optimal connection orders of data streams are different at different time points. However, in a current data connection operation, a connection order of data streams is determined first. Then, the data streams are joined in the determined connection order. Once the connection order is determined, the connection order of the data streams is constant, in other words, the connection order no longer changes. However, with proceeding of time, data in the sliding window is constantly updated, and a pre-determined connection order is not necessarily an optimal connection order. Consequently, data stream join cannot be completed highly efficiently.

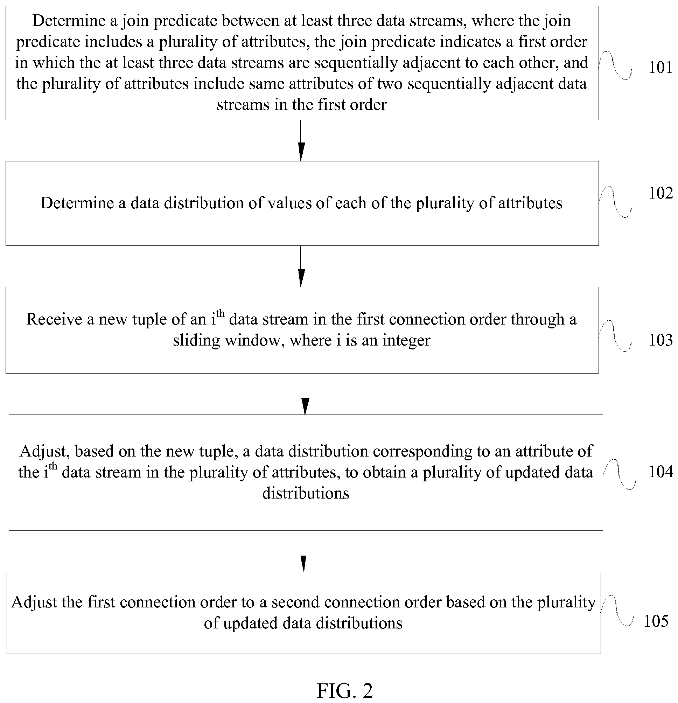

In view of this, embodiments of this application provide a data stream connection method and apparatus, to improve data stream connection efficiency by dynamically adjusting a connection order of data streams. Specifically, FIG. 2 is a flowchart of Embodiment 1 of a data stream connection method according to this application. The method includes the flowing steps.

101. Determine a join predicate between at least three data streams, where the join predicate includes a plurality of attributes, the join predicate indicates a first connection order of the at least three data streams, and the plurality of attributes are attributes that two adjacent data streams in the first connection order have and that have equal values.

In this embodiment of this application, each data stream during data connection has a different attribute (attribute, attr). The connection operation performed on two specific data streams is implemented by using attributes that the two data streams have and that have equal values. Having equal values means that in the two data streams, values of related attributes are equal. For example, if a data stream A has an attribute 1(attr1), a data stream B has an attribute 2(attr2), and a value of the attribute 1 and a value of the attribute 2 are equal, that is, A.attr1 = B.attr2, the attribute 1 and the attribute 2 are equal attributes of the data stream A and the data stream B. In addition, A.attr1 = B.attr2 is a join predicate between the data stream A and the data stream B.

In this step, when there are a plurality of data streams, for example, at least three data streams, a data stream platform determines a join predicate between the at least three data streams by using respective attributes of the data streams. In a determining process, two data streams whose attributes have equal values form adjacent data streams. After adjacent data streams are determined the first time, for any of the adjacent data streams, a data stream whose attribute has a value equal to a value of an attribute of the data is then determined in remaining data streams, to obtain three data streams that are sequentially adjacent to each other, until all data streams are sequentially adjacent to each other in pairs. In sequentially adjacent data streams, a summation of equal attributes of every two adjacent data streams indicates the first connection order. The first connection order indicates an order formed by sorting a plurality of data streams based on equal attributes. In this embodiment of this application, determining a connection order of data streams is: after a new tuple is received, determining two adjacent data streams, in the first connection order, on which a connection operation is first performed, to obtain an intermediate result; then, determining, in a left adjacent data stream and a right adjacent data stream, a data stream connected to the intermediate result, to obtain a next intermediate result; and subsequently, repeating the foregoing steps, until the connection operation is performed on an intermediate result obtained the last time and the first data stream in the first connection order, to obtain a final result, or until the connection operation is performed on an intermediate result obtained the last time and the last data stream in the first connection order, to obtain a final result. From reception of the new tuple to obtaining of the final result, a connection order of data streams in the process is represented in a form of a tree, and a join tree of the at least three data streams can be obtained. The intermediate result is a result of a connection operation performed on data streams on which the connection operation has been performed before a final result is obtained and when the connection operation has not performed on two or more data streams.

102. Determine a data distribution of values of each of the plurality of attributes.

In this step, data distributions of values of the plurality of attributes are determined by using a histogram, a pie graph, a table, and the like. An example in which the data distribution of the values of each attribute is determined by using a histogram is used. In this embodiment of this application, the histogram (Histogram) is also referred to as a quality distribution graph, is a statistics report graph, and includes a series of strips whose heights, lengths, or widths are not equal. A horizontal coordinate represents a range or a type of data. A vertical coordinate represents frequency at which data appears. In the histogram, each strip is referred to as a bucket, and is used to represent frequency at which a range of data or a type of data appears. After the first connection order is obtained, a histogram is constructed for each of values of attributes included in one or more join predicates indicating the first connection order, to obtain a histogram corresponding to each attribute, in other words, a data distribution of values of each attribute.

103. Receive a new tuple of an i^{th} data stream in the first connection order through a sliding window, where i is a positive integer.

104. Adjust, based on the new tuple, a data distribution corresponding to an attribute of the i^{th} data stream in the plurality of attributes, to obtain a plurality of updated data distributions.

In 103 and 104, after the data distribution of the values of each attribute is determined, the new tuple waits to be received, to adjust the data distribution in real time. Still using a histogram as an example, after a histogram is constructed for the values of each attribute, the new tuple waits to be received, to adjust the histogram in real time. Specifically, if a new tuple of any of the at least three data streams, for example, the i^{th} data stream, is received, a histogram corresponding to the attribute of the i^{th} data stream is adjusted. Usually, if the i^{th} data stream is the first data stream or the last data stream in the first connection order, only one histogram is adjusted; or if the i^{th} data stream is the first data stream or the last data stream in the first connection order, one or two histograms are adjusted. For example, data streams include a data stream A, a data stream B, a data stream C, and a data stream D, the first connection order is A JOIN B JOIN C JOIN D, and the join predicate is (A.attr1 = B.attr2) and (B.attr3 = C.attr4) and (C.attr5 = D.attr6). If the new tuple is from the data stream C, when attr4 and attr5 are a same attribute, attr4 and attr5 correspond to one histogram, only one histogram is adjusted. When attr4 and attr5 are different attributes, and a value of attr4 and a value of attr5 each correspond to one histogram, the histograms respectively corresponding to the value of attr4 and the value of attr5 are adjusted. For example, the histograms respectively corresponding to the value of attr4 and the value of attr5 are reconstructed; or the new tuple is accumulated onto the histograms respectively corresponding to the value of attr4 and the value of attr5.

During specific implementation, a data distribution is adjusted each time after a new tuple is received. Alternatively, a quantity of times may be preset, and when a quantity of times of receiving a new tuple reaches the preset quantity of times, a data distribution is adjusted.

105. Adjust the first connection order to a second connection order based on the plurality of updated data distributions.

In this step, after the data distribution of the values of each attribute is adjusted, the first connection order is adjusted to the second connection order based on the plurality of updated data distributions. For example, after a histogram is adjusted, the second connection order of the at least three data streams is determined based on the adjusted histogram and the histogram that is not adjusted. In a determining process, intermediate results generated when a data stream in which the new tuple is located is separately connected to a left adjacent data stream and a right adjacent data stream are determined based on the first connection order, and a data stream connected to the data stream in which the new tuple is located is determined in the two data streams, to generate an intermediate result; further; and a data stream connected to the intermediate result is determined, in the left data stream and the right data stream that are adjacent to the intermediate result, based on the intermediate result generated further, ... until a final result is determined.

In the foregoing process of determining connections between the at least three data streams, a sliding window is set for each data stream, to determine a connection order of tuples in respective sliding windows of the at least three data streams.

According to the data stream connection method provided in this embodiment of this application, the join predicate between the at least three data streams is determined based on the respective attributes of the at least three data streams, the first connection order in which the at least three data streams are sequentially adjacent to each other is obtained based on the join predicate, and the data distribution of the values of each attribute in the join predicate is determined. Subsequently, after a new tuple of any data stream is received, a data distribution corresponding to an attribute of the data stream is adjusted. Finally, the first connection order is adjusted to the second connection order based on the adjusted data distribution. In the process, a data distribution of values of an attribute corresponding to a data stream in which a new tuple is located is adjusted each time after the new tuple is received, so that the adjusted data distribution is consistent with an actual data distribution. Further, the second connection order of data streams is determined based on the data distribution adjusted in real time, thereby dynamically adjusting a connection order of data streams, and improving data stream connection efficiency.

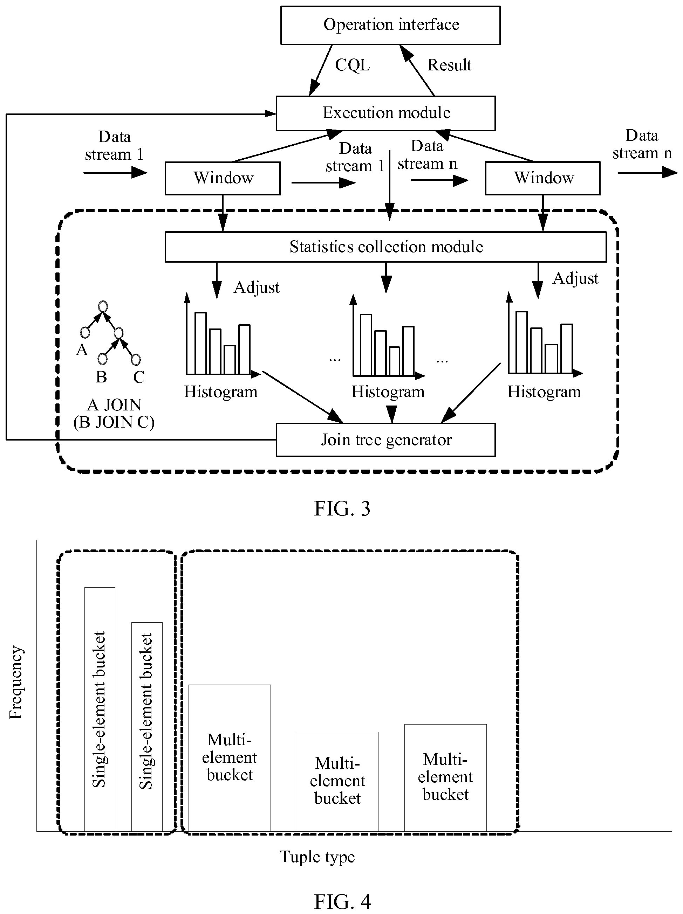

The following describes the foregoing data stream connection method in detail by using a specific embodiment. Specifically, FIG. 3 is a schematic architectural diagram of a data stream platform to which the data stream connection method in this application is applicable. The data stream platform includes an operation interface, an execution module, a statistics collection module, and a join tree generator.

Referring to FIG. 3, first, in a data stream connection process, a user describes, through an operation interface by using the Continuous Query Language (Continuous Query Language, CQL), data streams that need to be connected, and shows a join predicate between the data streams that need to be connected. Assuming that a connection operation needs to be performed on a data stream A of Event (Event) 1, a data stream B of Event2, and a data stream C of Event3, the related CQL language is, for example, as follows:
insert into G(attr1,attr2,attr3)
select A.attr1,B.attr2,C.attr2
from Event1.win:time_sliding(10 min) as A,Event2.win:time_sliding(10 min) as B, Event3.win:time_sliding(10 min) as C
where (A.attr2 = B.attr1) and (B.attr3 = C.attr4)

In the foregoing CQL language, for the three events, namely, Event1, Event2, and Event3, the connection operation is performed on tuples in respective 10-minute sliding windows. For ease of description, data streams of Event1, Event2, and Event3 are respectively expressed as the data stream A, the data stream B, and the data stream C. A connection condition is that a value of attr2 of a tuple in the data stream A is equal to a value of attr1 of a tuple in the data stream B, that is, A.attr2 = B.attr1. In addition, a value of attr3 of a tuple in the data stream B is equal to a value of attr4 of a tuple in the data stream C, that is, B.attr3 = C.attr4. The value of attr1 and the value of attr4 may be equal or not equal. As can be known, the join predicate between the data stream A, the data stream B, and the data stream C is (A.attr2 = B.attr1) and (B.attr3 = C.attr4). The connection operation is performed on the data stream A, the data stream B, and the data stream C by using the join predicate. The attribute attr1 in the tuple of the stream A, the attribute attr2 in the tuple of the stream B, and the attribute attr3 in the tuple of the stream C that satisfy a condition are selected to form a new tuple in a stream G, to serve as attributes attr1, attr2, and attr3 of the tuple in the stream G, to form a new data stream G. Finally, the connection operation on the data stream A, the data stream B, and the data stream C is finished.

The statistics collection module performs statistics collection on related attributes of data streams in real time, in other words, attributes included in a join predicate, based on information indicated by the join predicate, and generates a histogram of values of each attribute. For example, for an attribute of an i^{th} data stream, tuples in the i^{th} data stream are classified into at least one type. One type of tuples corresponds to one bucket in a histogram of the attribute of the i^{th} data stream. The histogram is, for example, a compressed histogram (Compressed Histogram). The compressed histogram is one of partial histograms. For example, a compressed histogram is constructed for an attribute of a tuple in a 10-minute sliding window of the i^{th} data stream. In a construction process, β types of tuples that appear most frequently are respectively placed in β buckets (single-element buckets), remaining tuples are placed, in a form of equal widths (or equal depths), in α non-single-element buckets, α + β = m, a quantity of tuples in the single-element buckets is greater than N/m, N is a quantity of tuples in the 10-minute sliding window, and m is a quantity of buckets. Assuming that there are ten types of tuples 1 to 10 in total in the 10-minute sliding window, there are 20 tuples 1, 15 tuples 2, 10 tuples 3, 5 tuples 4, 5 tuples 5, 1 tuple 6, 1 tuple 7, 1 tuple 8, 1 tuple 9, and 1 tuple 10, there are 60 tuples in total in the sliding window. Assuming that the 60 tuples are divided into m = 5 buckets, only quantities of tuples in buckets corresponding to the tuple 1 and the tuple 2 exceed an average number 12 (N/m = 60/5 = 12). Therefore, the tuples 1 and the tuples 2 each form a single-element bucket, that is, β = 2. Specifically, FIG. 4 is a schematic diagram of an example of a histogram in a data stream connection method according to this application.

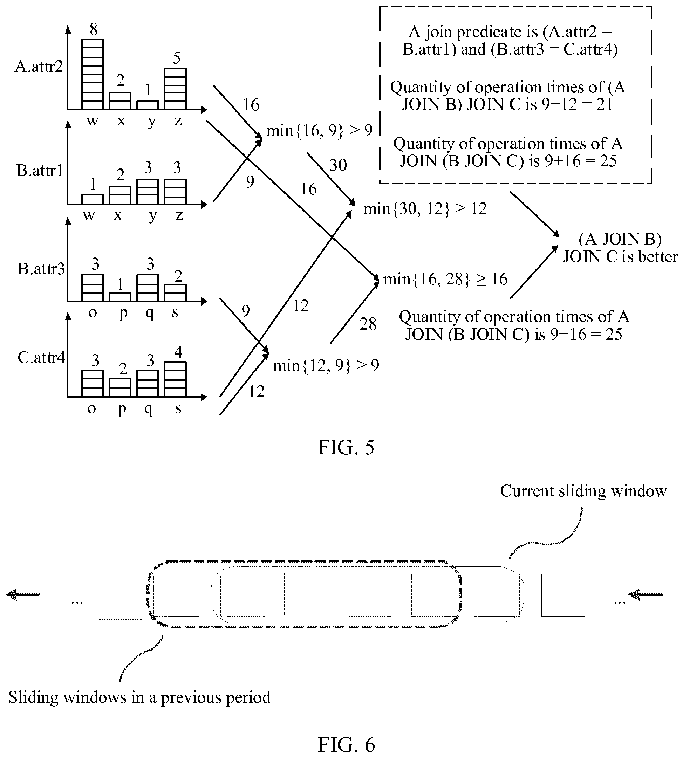

Subsequently, for a specific data stream, two data streams on the left and right of the data stream are searched for based on information provided in a histogram of values of each attribute, to serve as candidate data streams. A quantity of intermediate results generated in each possible connection order is estimated. Data streams having lowest price (that is, data streams generating a smallest quantity of intermediate results) are selected from the candidate data streams by using a local greedy policy, to form a join tree. Subsequently, a data stream is constantly added to the join tree also by using the local greedy policy, until all data streams are added to the join tree. The join tree is submitted to the execution module once the join tree is generated. The example in which a connection operation is performed on tuples in respective ten-minute sliding windows of the foregoing three events, namely, Event1, Event2, and Event3, is still used. A generation process of a join tree is shown in FIG. 5. FIG. 5 is a schematic diagram of an example of the generation process of a join tree in a data stream connection method according to this application.

Referring to FIG. 5, histograms of a value of A.attr2 and a value of B.attr1 each include 4 buckets w, x, y, and z. A number on each bucket represents a quantity of tuples in the bucket. For example, in the histogram of the value of A.attr2, a quantity of tuples in the bucket w is 8, a quantity of tuples in the bucket x is 2, a quantity of tuples in the bucket y is 1, and a quantity of tuples in the bucket z is 5. For another example, in the histogram of the value of B.attr3, a quantity of tuples in a bucket o is 3, a quantity of tuples in a bucket p is 1, a quantity of tuples in a bucket q is 3, and a quantity of tuples in a bucket s is 2.

In a data connection operation, assuming that a connection order is A JOIN B JOIN C, a minimum quantity of operation times of A JOIN B is min{16, 9} = 9. It can be known according to the histogram of the value of A.attr2 that 16 = 8+2+1+5. It can be known according to the histogram of the value of B.attr1 that 9 = 1+2+3+3. It can be known according to the histogram of the value of A.attr2 and the histogram of the value of B.attr1 that a quantity of generated intermediate results is 30, where 30 = 8×1+2×2+1×3+5×3. The connection operation is performed on the intermediate results of A JOIN B and a data stream C. A quantity of operation times is min{30, 12} = 12. It can be known according to a histogram of a value of C.attr4 that 12 = 3+2+3+4. As can be known, a total quantity of operation times of A JOIN B JOIN C is 9+12 = 21.

In a data connection operation, assuming that a connection order is A JOIN (B JOIN C), a minimum quantity of operation times of B JOIN C is min{9, 12} = 9. It can be known according to the histogram of B.attr3 that 9 = 3+1+3+2. It can be known according to the histogram of C.attr4 that 12 = 3+2+3+4. It can be known according to the histogram of B.attr3 and the histogram of C.attr4 that a quantity of generated intermediate results is 28, where 28 = 3×3+1×2+3×3+2×3. The connection operation is performed on the intermediate results of B JOIN C and a data stream A. A quantity of operation times is min {28, 16} = 16. It can be known according to the histogram of A.attr2 that 16 = 8+2+1+5. As can be known, a total quantity of operations times of A JOIN (B JOIN C) is 9+16 = 25.

In conclusion, as can be known from the above, the total quantity of operations times of A JOIN B JOIN C is 21, and the total quantity of operations times of A JOIN (B JOIN C) is 25. Obviously, a connection order of A JOIN B JOIN C is better than a connection order of A JOIN (B JOIN C).

After a new tuple of the i^{th} data stream, in other words, any data stream, is received, a histogram corresponding to an attribute of the i^{th} data stream is adjusted. A quantity of intermediate results generated in each possible connection order is estimated based on information provided in the adjusted histogram and the histogram that is not adjusted. A data stream having lowest price is selected from candidate data streams by using a local greedy policy, and is constantly added to a join tree, until all data streams are added to the join tree. The join tree is submitted to the execution module once the join tree is generated.

Finally, the execution module performs the connection operation on the data streams based on a connection order provided by a join tree generator.

The foregoing embodiment includes two pieces of core content: (1) The statistics collection module maintains a histogram in real time, and ensures that a data distribution represented by the histogram is consistent with an data actual distribution in a sliding window; and (2) the join tree generator rapidly generates a connection order based on information provided in the histogram. The following describes the two pieces of core content in detail.

First, the statistics collection module maintains a histogram in real time.

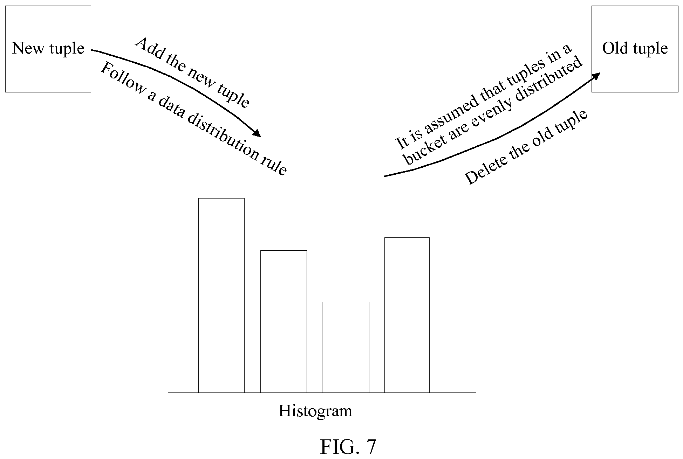

Specifically, in this embodiment of this application, a policy for adjusting a histogram may be summarized as dynamic maintenance and necessary reconstruction, thereby avoiding a problem of large overheads caused because an entire sliding window needs to be scanned when a histogram is generated. In a process of receiving the new tuple of the i^{th} data stream and adjusting the histogram of the attribute of the i^{th} data stream, whether the histogram corresponding to the attribute of the i^{th} data stream exceeds the error threshold is determined. If the histogram corresponding to the attribute of the i^{th} data stream does not exceed the error threshold, an expired tuple in the histogram corresponding to the attribute of the i^{th} data stream is deleted. The expired tuple is a tuple that has flown out of the sliding window of the i^{th} data stream. The received new tuple is added to the histogram (which is equivalent to real-time maintenance). If the histogram corresponding to the attribute of the i^{th} data stream exceeds the error threshold, the histogram corresponding to the attribute of the i^{th} data stream is reconstructed (which is equivalent to necessary reconstruction). Specifically, FIG. 6 is a schematic diagram of a change in a sliding window in a data stream connection method according to this application, and FIG. 7 is a schematic diagram of a maintenance process of a data distribution in a data stream connection method according to this application.

Referring to FIG. 6, the sliding window includes 5 tuples. When a new tuple is received, a tuple appearing the earliest in the sliding window in a previous period is deleted, and the new tuple is added to the sliding window, to obtain a current sliding window. Further, the change in the sliding window is mapped to a histogram in real time. In the histogram, a new tuple is constantly added to a related bucket, and an expired tuple (a tuple appearing the earliest) is deleted, to obtain FIG. 7.

In a process of adjusting a histogram, assuming that tuples in a bucket of the histogram are evenly distributed. However, actually, a probability of adding a tuple of a value to a bucket of a histogram or deleting a tuple of a value from a bucket of a histogram varies. With proceeding of time, a tuple distribution represented by the histogram is inconsistent with an actual tuple distribution in the sliding window. In this embodiment of this application, an error threshold is set for the histogram. If the histogram exceeds the error threshold, the histogram is reconstructed (that is, necessary reconstruction). If the histogram does not exceed the error threshold, an expired tuple in the histogram is deleted, and the received new tuple is added to the histogram. The following describes the error threshold in detail.

Specifically, it is assumed that a new tuple belonging to an i^{th} data stream is received, and a data distribution of values of an attribute of the i^{th} data stream is adjusted based on the new tuple. In an adjustment process, whether the data distribution exceeds the error threshold is determined. The error threshold includes at least one of the following thresholds: a first threshold, a second threshold, and a third threshold, where
a quantity of single-element buckets in the data distribution corresponding to the attribute of the i^{th} data stream exceeds a first threshold, and if the quantity exceeds the first threshold, it indicates that a quantity of tuples in the single-element bucket in the data distribution does not conform to a standard of the single-element bucket, and the data distribution needs to be reconstructed;
a parameter of a non-single-element bucket in the data distribution corresponding to the attribute of the i^{th} data stream exceeds a second threshold, where the parameter includes a depth or a width; and if the parameter exceeds the second threshold, it indicates that the single-element bucket in the data distribution no longer conforms to performance of equal widths or equal depths, and the data distribution needs to be reconstructed; and
a difference between a quantity of buckets in the data distribution corresponding to the attribute of the i^{th} data stream and an initial quantity of buckets in the data distribution corresponding to the attribute of the data stream exceeds a third threshold, and if the difference exceeds the third threshold, it indicates that the quantity of buckets in the data distribution and the initial quantity of buckets differ a lot, and the data distribution needs to be reconstructed.

If it is determined that the data distribution exceeds any one or all of the first threshold, the second threshold, and the third threshold, the data distribution is reconstructed; otherwise, it indicates that a tuple distribution represented by the data distribution is basically consistent with an actual tuple distribution in the sliding window, and only a new tuple needs to be accumulated onto the existing data distribution. The data distribution is, for example, a histogram.

A join tree generator rapidly generates a connection order based on information provided in the histogram.

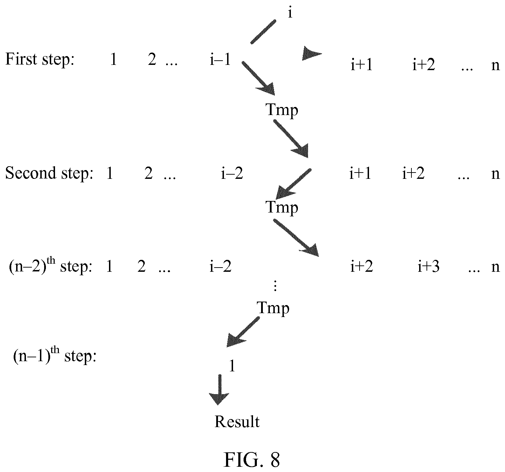

In this embodiment of this application, the data distribution is generated mainly by using a local greedy algorithm. For a connection feature of data streams, only a quantity of intermediate results generated when a data stream is connected to left and right adjacent data streams is estimated based on a first connection order indicated by a join predicate and by using tuple distribution information provided by the data distribution, and one data stream is selected from the left and right adjacent data streams, to serve as an object in a next connection. Specifically, FIG. 8 is a schematic diagram of a process of selecting a data stream from adjacent data streams by using a local greedy policy in a data stream connection method according to this application.

Specifically, a connection operation needs to be performed on n data streams, to be specific, 1 to n data streams. After a new tuple of any data stream other than the first data stream or the last data stream of the 1 to n data streams is received, data distributions of values of attributes of i data streams are adjusted first. Subsequently, a first quantity is determined based on a data distribution corresponding to an attribute of an (i-1)^{th} data stream and the data distribution corresponding to the attribute of the i^{th} data stream, where the first quantity is a quantity of first intermediate results, and the first intermediate result is an intermediate result generated when a connection operation is performed on the (i-1)^{th} data stream and an (i+1)^{th} data stream. A second quantity is determined based on the data distribution corresponding to the attribute of the i^{th} data stream and a data distribution corresponding to an attribute of the (i+1)^{th} data stream, where the second quantity is a quantity of second intermediate results, and the second intermediate result is an intermediate result generated when the connection operation is performed on the i^{th} data stream and the (i+1)^{th} data stream. Finally, a data stream connected to the i^{th} data stream is determined in the (i-1)^{th} data stream and the (i+1)^{th} data stream based on the first quantity and the second quantity. If the first quantity is less than the second quantity, it is determined, in the (i-1)^{th} data stream and the (i+1)^{th} data stream, that the data stream connected to the i^{th} data stream is the (i-1)^{th} data; the connection operation is performed on the (i-1)^{th} data stream and the i^{th} data stream, to obtain the first intermediate result; and the first intermediate result is stored in a tmp. The process is shown by the arrow in the first step in FIG. 8.

After the first step is completed, the second step is performed: determining, based on a data distribution corresponding to an attribute of an (i-2)^{th} data stream, a third quantity of intermediate results generated when the connection operation is performed on the (i-2)^{th} data stream and the first intermediate result; determining, based on the data distribution corresponding to the attribute of the (i+1)^{th} data stream, a fourth quantity of intermediate results generated when the connection operation is performed on the first intermediate result and the (i+1)^{th} data stream; and determining, in the (i-2)^{th} data stream and the (i+1)^{th} data stream based on the third quantity and the fourth quantity, a data stream connected to the first intermediate result. Assuming that the third quantity is greater than the fourth quantity, it is determined that the data stream connected to the first intermediate result is the (i+1)^{th} data stream; the connection operation is performed on the first intermediate result and the (i+1)^{th} data stream, to continue to obtain an intermediate result; and the intermediate result is stored in the tmp. The process is shown by the arrow in the second step in FIG. 8.

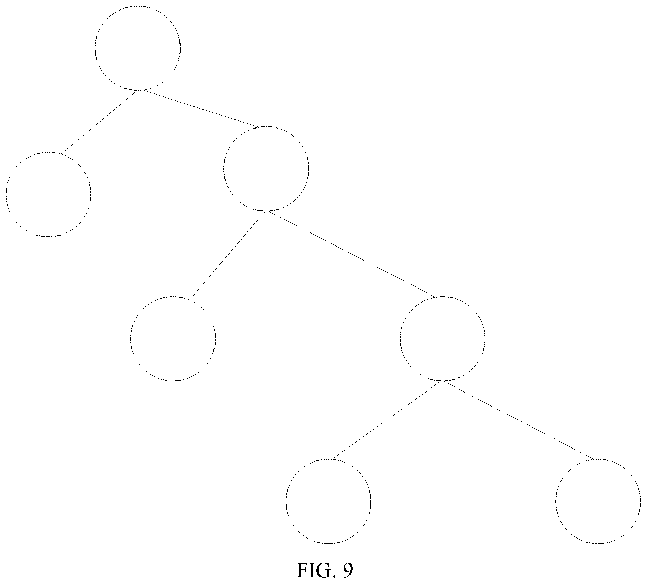

Then, the subsequent third step to an (n-1)^{th} step continue to be performed. In each step, a data stream having less intermediate results is selected to serve as a connection object, the data stream is added to a join tree, and a quantity of intermediate results is estimated. An entire join tree is constructed until all data streams are added to the join tree. Specifically, FIG. 9 is a schematic diagram of a generation process of a join tree in a data stream connection method according to this application. Complexity of join tree generation is reduced by using the foregoing local greedy policy.

In the process of determining, in the (i-1)^{th} data stream and the (i+1)^{th} data stream, the data stream connected to the i^{th} data stream, an example in which the first quantity is less than the second quantity is used for a detailed description. The following separately describes cases in which the first quantity is greater than the second quantity, and the first quantity is equal to the second quantity.

If the first quantity is greater than the second quantity, it is determined that the data stream connected to the i^{th} data stream is the (i+1)^{th} data stream, and the connection operation is performed on the i^{th} data stream and the (i+1)^{th} data stream, to obtain the second intermediate result. Subsequently, a fifth quantity of intermediate results generated when the connection operation is performed on the second intermediate result and an (i+2)^{th} data stream is determined based on a data distribution corresponding to an attribute of the (i+2)^{th} data stream. A sixth quantity of intermediate results generated when the connection operation is performed on the (i-1)^{th} data stream and the second intermediate result is determined based on a data distribution corresponding to an attribute of an (i-1)^{th} data stream. The data stream connected to the second intermediate result is determined in the (i-1)^{th} data stream and the (i+2)^{th} data stream based on the fifth quantity and the sixth quantity. For a determining process, refer to the above, and details are not described herein again.

In the foregoing embodiment, when the i^{th} data stream is not the first data stream or the last data stream in the first connection order, because data streams, namely, the (i-1)^{th} data stream and the (i+1)^{th} data stream, adjacent to the i^{th} data stream exist on the left side and the right side of the i^{th} data stream, in this case, two types of intermediate results, which are respectively the first intermediate result and the second intermediate result, can be obtained. Therefore, the data stream connected to the i^{th} data stream needs to be selected based on a quantity of first intermediate results and a quantity of second intermediate results.

When the i^{th} data stream is the first data stream in the first connection order, there is only one data stream, namely, the second data stream, adjacent to the i^{th} data stream. In this case, the connection operation is performed on the first data stream and the second data stream. The connection operation continues to be performed on an obtained intermediate result and the third data stream.... Therefore, when the i^{th} data stream is the first data stream in the first connection order, the first connection order is directly used as the second connection order.

When the i^{th} data stream is the last data stream in the first connection order, there is only one data stream, namely, the penultimate data stream, adjacent to the i^{th} data stream. In this case, the connection operation is performed on the last data stream and the penultimate data stream. The connection operation continues to be performed on an obtained intermediate result and the antepenultimate data stream.... Therefore, when the i^{th} data stream is the last data stream in the first connection order, the first connection order is reversed, to obtain the second connection order.

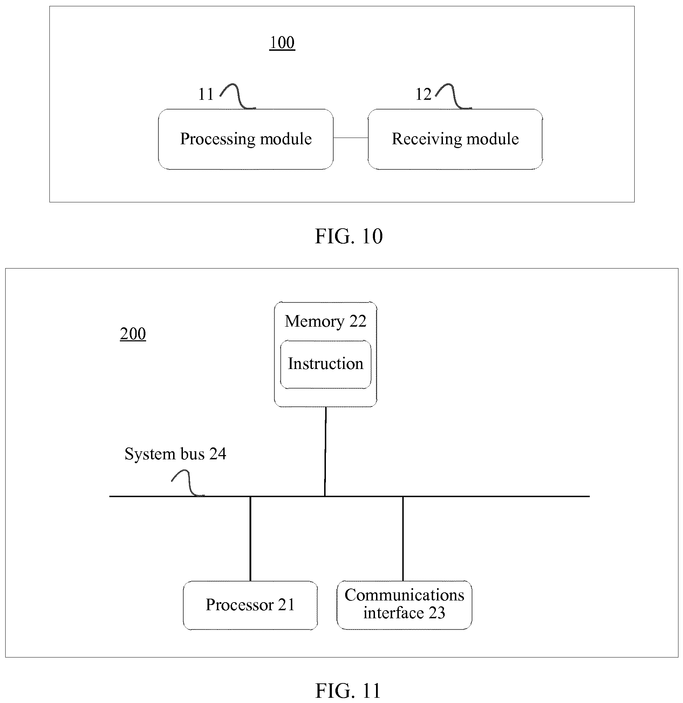

FIG. 10 is a schematic structural diagram of Embodiment 1 of a data stream connection apparatus according to this application. The data stream connection apparatus provided in this embodiment may implement steps of the method that is provided in any embodiment of this application and that is applied to the data stream connection apparatus. Specifically, the data stream connection apparatus 100 provided in this embodiment includes:
a processing module 11, configured to: determine a join predicate between at least three data streams, where the join predicate includes a plurality of attributes, the join predicate indicates a first connection order of the at least three data streams, and the plurality of attributes are attributes that two adjacent data streams in the first connection order have equal values; and determine a data distribution of values of each of the plurality of attributes; and
a receiving module 12, configured to receive a new tuple of an i^{th} data stream in the first connection order through a sliding window, where i is a positive integer, where
the processing module 11 is further configured to: adjust, based on the new tuple, a data distribution corresponding to an attribute of the i^{th} data stream in the plurality of attributes, to obtain a plurality of updated data distributions; and adjust the first connection order to a second connection order based on the plurality of updated data distributions.

According to the data stream connection apparatus provided in this embodiment of this application, the join predicate between the at least three data streams is determined based on the respective attributes of the at least three data streams, the first connection order in which the at least three data streams are sequentially adjacent to each other is obtained based on the join predicate, and the data distribution of the values of each attribute in the join predicate is determined. Subsequently, after a new tuple of any data stream is received, a data distribution corresponding to an attribute of the data stream is adjusted. Finally, the first connection order is adjusted to the second connection order based on the adjusted data distribution. In the process, a data distribution of values of an attribute corresponding to a data stream at which a new tuple is located is adjusted each time after the new tuple is received, so that the adjusted data distribution is consistent with an actual data distribution. Further, the second connection order of data streams is determined based on the data distribution adjusted in real time, thereby dynamically adjusting a connection order of data streams, and improving data stream connection efficiency.

In addition, the data stream connection apparatus provided in this embodiment of this application may further implement steps of the method, in the foregoing optional embodiments, applied to the data stream connection apparatus. For a specific implementation principle and beneficial effects, refer to the method embodiments, and details are not described herein again.

It should be noted that it should be understood that division of various modules of the data stream connection apparatus in FIG. 10 is merely a logical function division. During actual implementation, all or some modules may be integrated into one physical entity, or may be physically separated. The modules may all be implemented in a form in which a processing element invokes software; or may all be implemented in a form of hardware; or some modules may be implemented in a form in which a processing element invokes software, and some modules are implemented in a form of hardware. For example, the determining module may be an independent processing element, or may be integrated in a chip of the foregoing apparatus for implementation. In addition, the determining module may alternatively be stored in a memory of the foregoing apparatus in a form of program code. The program code is invoked by a processing element of the foregoing apparatus to perform the function of the foregoing determining module. Implementation of other modules is similar. In addition, all or some of the modules may be integrated together, or may be independently implemented. The processing element herein may be an integrated circuit, and has a signal processing capability. In an implementation process, steps in the foregoing methods or the foregoing modules can be implemented by using a hardware integrated logical circuit in the processing element, or by using instructions in a form of software.

For example, the foregoing modules may be one or more integrated circuits configured to implement the foregoing method, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the foregoing modules is implemented in a form in which a processing element invokes program code, the processing element may be a general-purpose processor, for example, a central processing unit (Central Processing Unit, CPU) or another processor that can invoke the program code. For another example, the modules may be integrated together, and are implemented in a form of a system (system-on-a-chip, SOC).

FIG. 11 is a schematic structural diagram of Embodiment 2 of a data stream connection apparatus according to this application. The data stream connection apparatus 200 provided in this embodiment includes: a processor 21, a memory 22, a communications interface 23, and a system bus 24. The memory 22 and the communications interface 23 are connected to and communicate with the processor 21 by using the system bus 34. The memory 22 is configured to store a computer-executable instruction. The communications interface 23 is configured to communicate with another device. The processor 21 is configured to run the computer-executable instruction, to cause the data stream connection apparatus to perform steps of the foregoing method applied to the data stream connection apparatus.

It should be noted that, the data stream connection apparatus in FIG. 11 may be, for example, disposed on a server or a computer. All or some units of the apparatus may be built in a chip of the terminal in a form of a field programmable gate array (Field Programmable Gate Array, FPGA) for implementation. They may be implemented independently, or may be integrated together. Same as the processing element in the foregoing description, the processing element herein may be a general-purpose processor, for example, a CPU, or may be one or more integrated circuits configured to implement the foregoing method, for example, one or more application-specific integrated circuits (Application Specific Integrated Circuit, ASIC), one or more microprocessors (digital signal processor, DSP), or one or more field programmable gate arrays (Field Programmable Gate Array, FPGA). A storage element may be a storage apparatus, or may be a joint name for a plurality of storage elements.

In addition, the processor may be provided with a plurality of interfaces, which are separately configured to connect to a peripheral or an interface circuit connected to a peripheral, for example, an interface configured to connect to a display screen, an interface configured to connect to a camera, or an interface configured t connect to an audio processing element.

In addition, in FIG. 10 and FIG. 11, the processing module 11 corresponds to the processor 21, the receiving module 12 corresponds to the communications interface 23, and the like.

## Claims

1. A data stream connection method, comprising:
determining a join predicate between at least three data streams, wherein the join predicate comprises a plurality of attributes, the join predicate indicates a first connection order of the at least three data streams, and the plurality of attributes are attributes that two adjacent data streams in the first connection order have and that have equal values;
determining a data distribution of values of each of the plurality of attributes;
receiving a new tuple of an i^{th} data stream in the first connection order through a sliding window, wherein i is a positive integer;
adjusting, based on the new tuple, a data distribution corresponding to an attribute of the i^{th} data stream in the plurality of attributes, to obtain a plurality of updated data distributions; and
adjusting the first connection order to a second connection order based on the plurality of updated data distributions.

2. The method according to claim 1, wherein the adjusting a data distribution corresponding to an attribute of the i^{th} data stream in the plurality of attributes, to obtain a plurality of updated data distributions comprises:
determining whether the data distribution corresponding to the attribute of the i^{th} data stream exceeds an error threshold; and
if the data distribution corresponding to the attribute of the i^{th} data stream does not exceed the error threshold, deleting a value of an expired tuple in the data distribution corresponding to the attribute of the i^{th} data stream, and adding a value of the received new tuple to the data distribution, wherein the expired tuple is a tuple that has flown out of the sliding window of the i^{th} data stream; or
if the data distribution corresponding to the attribute of the i^{th} data stream exceeds the error threshold, reconstructing the data distribution corresponding to the attribute of the i^{th} data stream, to obtain the plurality of updated data distributions.

3. The method according to claim 2, wherein the error threshold comprises at least one of the following thresholds: a first threshold, a second threshold, and a third threshold, wherein
a quantity of single-element buckets in the data distribution corresponding to the attribute of the i^{th} data stream exceeds the first threshold, wherein tuples in the single-element bucket are of a same type;
a parameter of a non-single-element bucket in the data distribution corresponding to the attribute of the i^{th} data stream exceeds the second threshold, wherein there are at least one type of tuples in the non-single-element bucket, and the parameter comprises a depth or a width; and
a difference between a quantity of buckets in the data distribution corresponding to the attribute of the i^{th} data stream and an initial quantity of buckets in the data distribution corresponding to the attribute of the i^{th} data stream exceeds the third threshold.

4. The method according to any one of claims 1 to 3, wherein the i^{th} data stream is not the first data stream or the last data stream in the first connection order, and the adjusting the first connection order to a second connection order based on the plurality of updated data distributions comprises:
determining, based on the first connection order, an (i-1)^{th} data stream and an (i+1)^{th} data stream that are adjacent to the i^{th} data stream;
determining a first quantity based on a data distribution corresponding to an attribute of the (i-1)^{th} data stream and the data distribution corresponding to the attribute of the i^{th} data stream, wherein the first quantity is a quantity of first intermediate results, and the first intermediate result is an intermediate result generated when a connection operation is performed on the (i-1)^{th} data stream and the (i+1)^{th} data stream;
determining a second quantity based on the data distribution corresponding to the attribute of the i^{th} data stream and a data distribution corresponding to an attribute of the (i+1)^{th} data stream, wherein the second quantity is a quantity of second intermediate results, and the second intermediate result is an intermediate result generated when the connection operation is performed on the i^{th} data stream and the (i+1)^{th} data stream;
determining, in the (i-1)^{th} data stream and the (i+1)^{th} data stream based on the first quantity and the second quantity, a data stream connected to the i^{th} data stream; and
performing the connection operation on the determined data stream and the i^{th} data stream, to obtain an intermediate result; and adjusting the first connection order based on the intermediate result, to obtain the second connection order; and determining a data stream, in the first connection order, connected to the intermediate result, and repeating the operation, until the connection operation is performed on each of the at least three data streams, to adjust the first connection order to the second connection order, wherein the intermediate result is the first intermediate result or the second intermediate result.

5. The method according to claim 4, wherein the determining, in the (i-1)^{th} data stream and the (i+1)^{th} data stream based on the first quantity and the second quantity, a data stream connected to the i^{th} data stream comprises:
if the first quantity is less than the second quantity, determining, in the (i-1)^{th} data stream and the (i+1)^{th} data stream, that the data stream connected to the i^{th} data stream is the (i-1)^{th} data stream; and
correspondingly, the performing the connection operation on the determined data stream and the i^{th} data stream, to obtain an intermediate result comprises:
performing the connection operation on the (i-1)^{th} data stream and the i^{th} data stream, to obtain the first intermediate result.

6. The method according to claim 4, wherein the determining, in the (i-1)^{th} data stream and the (i+1)^{th} data stream based on the first quantity and the second quantity, a data stream connected to the i^{th} data stream comprises:
if the first quantity is greater than the second quantity, determining, in the (i-1)^{th} data stream and the (i+1)^{th} data stream, that the data stream connected to the i^{th} data stream is the (i+1)^{th} data stream; and
correspondingly, the performing the connection operation on the determined data stream and the i^{th} data stream, to obtain an intermediate result comprises:
performing the connection operation on the i^{th} data stream and the (i+1)^{th} data stream, to obtain the second intermediate result.

7. The method according to any one of claims 1 to 3, wherein the adjusting the first connection order to a second connection order based on the plurality of updated data distributions comprises:
when the i^{th} data stream is the first data stream in the first connection order, using the first connection order as the second connection order; and
when the i^{th} data stream is the last data stream in the first connection order, reversing the first connection order, to obtain the second connection order.

8. The method according to any one of claims 1 to 7, wherein the determining a data distribution of values of each of the plurality of attributes comprises:
for each attribute, grouping the values of the attribute, wherein each group corresponds to one bucket in the data distribution, to obtain the data distribution of the values of each of the plurality of attributes.

9. A data stream connection apparatus, comprising:
a processing module, configured to: determine a join predicate between at least three data streams, wherein the join predicate comprises a plurality of attributes, the join predicate indicates a first connection order of the at least three data streams, and the plurality of attributes are attributes that two adjacent data streams in the first connection order have and that have equal values; and determine a data distribution of values of each of the plurality of attributes; and
a receiving module, configured to receive a new tuple of an i^{th} data stream in the first connection order through a sliding window, wherein i is a positive integer, wherein
the processing module is further configured to: adjust, based on the new tuple, a data distribution corresponding to an attribute of the i^{th} data stream in the plurality of attributes, to obtain a plurality of updated data distributions; and adjust the first connection order to a second connection order based on the plurality of updated data distributions.

10. The apparatus according to claim 9, wherein
when adjusting the data distribution corresponding to the attribute of the i^{th} data stream in the plurality of attributes, to obtain the plurality of updated data distributions, the processing module is specifically configured to: determine whether the data distribution corresponding to the attribute of the i^{th} data stream exceeds an error threshold; and if the data distribution corresponding to the attribute of the i^{th} data stream does not exceed the error threshold, delete a value of an expired tuple in the data distribution corresponding to the attribute of the i^{th} data stream, and add a value of the received new tuple to the data distribution, wherein the expired tuple is a tuple that has flown out of the sliding window of the i^{th} data stream; or if the data distribution corresponding to the attribute of the i^{th} data stream exceeds the error threshold, reconstruct the data distribution corresponding to the attribute of the i^{th} data stream, to obtain the plurality of updated data distributions.

11. The apparatus according to claim 10, wherein the error threshold comprises at least one of the following thresholds: a first threshold, a second threshold, and a third threshold, wherein
a quantity of single-element buckets in the data distribution corresponding to the attribute of the i^{th} data stream exceeds a first threshold, wherein tuples in the single-element bucket are of a same type;
a parameter of a non-single-element bucket in the data distribution corresponding to the attribute of the i^{th} data stream exceeds a second threshold, wherein there are at least one type of tuples in the non-single-element bucket, and the parameter comprises a depth or a width; and
a difference between a quantity of buckets in the data distribution corresponding to the attribute of the i^{th} data stream and an initial quantity of buckets in the data distribution corresponding to the attribute of the i^{th} data stream exceeds a third threshold.

12. The apparatus according to any one of claims 9 to 11, wherein the i^{th} data stream is not the first data stream or the last data stream in the first connection order; when adjusting the first connection order to the second connection order based on the plurality of updated data distributions, the processing module is specifically configured to: determine, based on the first connection order, an (i-1)^{th} data stream and an (i+1)^{th} data stream that are adjacent to the i^{th} data stream; determine a first quantity based on a data distribution corresponding to an attribute of the (i-1)^{th} data stream and the data distribution corresponding to the attribute of the i^{th} data stream, wherein the first quantity is a quantity of first intermediate results, and the first intermediate result is an intermediate result generated when a connection operation is performed on the (i-1)^{th} data stream and the (i+1)^{th} data stream; determine a second quantity based on the data distribution corresponding to the attribute of the i^{th} data stream and a data distribution corresponding to an attribute of the (i+1)^{th} data stream, wherein the second quantity is a quantity of second intermediate results, and the second intermediate result is an intermediate result generated when the connection operation is performed on the i^{th} data stream and the (i+1)^{th} data stream; determine, in the (i-1)^{th} data stream and the (i+1)^{th} data stream based on the first quantity and the second quantity, a data stream connected to the i^{th} data stream; perform the connection operation on the determined data stream and the i^{th} data stream, to obtain an intermediate result; and adjust the first connection order based on the intermediate result, to obtain the second connection order.

13. The apparatus according to claim 12, wherein
when determining, in the (i-1)^{th} data stream and the (i+1)^{th} data stream based on the first quantity and the second quantity, the data stream connected to the i^{th} data stream, the processing module is specifically configured to: if the first quantity is less than the second quantity, determine, in the (i-1)^{th} data stream and the (i+1)^{th} data stream, that the data stream connected to the i^{th} data stream is the (i-1)^{th} data stream; and
correspondingly, when performing the connection operation on the determined data stream and the i^{th} data stream, to obtain the intermediate result, the processing module is specifically configured to perform the connection operation on the (i-1)^{th} data stream and the i^{th} data stream, to obtain the first intermediate result.

14. The apparatus according to claim 12, wherein
when determining, in the (i-1)^{th} data stream and the (i+1)^{th} data stream based on the first quantity and the second quantity, the data stream connected to the i^{th} data stream, the processing module is specifically configured to: if the first quantity is greater than the second quantity, determine, in the (i-1)^{th} data stream and the (i+1)^{th} data stream, that the data stream connected to the i^{th} data stream is the (i+1)^{th} data stream; and
correspondingly, when performing the connection operation on the determined data stream and the i^{th} data stream, to obtain the intermediate result, the processing module is specifically configured to perform the connection operation on the i^{th} data stream and the (i+1)^{th} data stream, to obtain the second intermediate result.

15. The apparatus according to any one of claims 9 to 11, wherein when adjusting the first connection order to the second connection order based on the plurality of updated data distributions, the processing module is specifically configured to: when the i^{th} data stream is the first data stream in the first connection order, use the first connection order as the second connection order; or
the processing module is specifically configured to: when the i^{th} data stream is the last data stream in the first connection order, reverse the first connection order, to obtain the second connection order.

16. The apparatus according to any one of claims 9 to 15, wherein
when determining the data distribution of the values of each of the plurality of attributes, the processing module is specifically configured to: for each attribute, group the values of the attribute, wherein each group corresponds to one bucket in the data distribution, to obtain the data distribution of the values of each of the plurality of attributes.

17. A data stream connection apparatus, comprising: a processor, a memory, a communications interface, and a system bus, wherein the memory and the communications interface are connected to the processor and communicate with the processor by using the system bus, the memory is configured to store a computer-executable instruction, the communications interface is configured to communicate with another device, and the processor is configured to run the computer-executable instruction, to cause the data stream connection apparatus to perform the method according to any one of claims 1 to 8.
